# EUROPÄISCHE PATENTSCHRIFT

(11) **EP 0 203 545 B1**
(45) Veröffentlichungstag und Bekanntmachung des Hinweises auf die Patenterteilung: **10.02.1993**
(21) Anmeldenummer: 86107004.3
(22) Anmeldetag: 23.05.1986
(51) Int. Cl.: F21M 3/10, F21V 23/02

(54) **Kraftfahrzeugscheinwerfereinheit**
Motor vehicle head light
Projecteur pour véhicule automobile

(30) Priorität: 31.05.1985 DE 3519611
(43) Veröffentlichungstag der Anmeldung: 03.12.1986
(73) Patentinhaber: Patent-Treuhand-Gesellschaft für elektrische Glühlampen mbH, 81543 München (DE)
(72) Erfinder: Wurster, Ewald, Dr., D-8022 Grünwald (DE)

(56) Entgegenhaltungen:
- EP-A- 114 742
- BE-A- 811 278
- DE-B- 1 131 806
- DE-C- 1 221 355
- FR-A- 2 089 874
- GB-A- 2 016 131

## Beschreibung

Die Erfindung betrifft eine Kraftfahrzeugscheinwerfereinheit mit einem durch eine Streuscheibe abgedeckten Reflektor, einer innerhalb des Reflektors angeordneten Hochdruckentladungslampe und einem zum Betrieb der Hochdruckentladungslampe erforderlichen Vorschaltgerät.

Der Einsatz von Entladungslampen in die Scheinwerfer von Kraftfahrzeugen wurde aufgrund ihrer gegenüber Glühlampen wesentlich verbesserten Lichtausbeute erst in letzter Zeit vorgeschlagen. Bekannterweise wird zum Betrieb dieser Lampen ein Vorschaltgerät benötigt. Wegen der Notwendigkeit, die Zündung der Lampe zu jedem Abkühlzeitpunkt zu ermöglichen, haben sich elektronische Vorschaltgeräte besonders bewährt, bei denen die Lampe mit Hochfrequenz betrieben wird. Insbesondere bei der Heißzündung von Hochdruckentladungslampen ist eine Zündspannung von bis zu ca. 25 kV erforderlich. Diese Hochspannung wurde bisher vom Vorschaltgerät über hochspannungsisolierte Kabel zur Lampe geführt. Trotz des hierfür hohen Aufwandes für die Isolation der Hochspannung sind Überschläge zu Teilen der Karosserie des Fahrzeuges und die schädliche Einwirkung unterschiedlicher Witterungseinflüsse nicht auszuschließen.

In der EP-A 114 742 wird eine Kfz-Scheinwerfereinheit beschrieben, die aus einer Kombination von einer Hochdruckentladungslampe mit einer Halogenglühlampe besteht, wobei die Halogenglühlampe während der Anlaufphase der Hochdruckentladungslampe für eine ausreichende Beleuchtung sorgt.
Das Vorschaltgerät für die Hochdruckentladungslampe enthält ein Zündgerät, das auf dem Lampensockel direkt hinter dem Reflektor angeordnet ist, und ein Betriebsgerät. Ein gravierender Nachteil dieser Scheinwerfereinheit besteht darin, daß das Zünd- und das Betriebsgerät räumlich getrennt voneinander angeordnet sind, wodurch externe Zuleitungskabel zwischen ihnen erforderlich sind, die relativ hohe Spannungen führen. Diese Zuleitungskabel sind im Auto den Witterungseinflüssen ausgesetzt und können korrodieren und zu einer Gefahr für den Benutzer werden.

Aus der GB-A 2 016 131 ist eine elektrische Leuchte bekannt, bei der eine Niederdruckentladungslampe direkt in das Vorschaltgerät eingesetzt ist. Allerdings können aufgrund der erheblichen physikalischen und technischen Unterschiede von Niederdruck- und Hochdruckentladungslampen (z.B.: Betriebstemperatur, Zünd-, Betriebsspannung, Elektrodenabstand etc.) und den daraus resultierenden Anforderungen an das Vorschaltgerät die in der GB-A 2 016 131 offenbarte Leuchte und die erfindungsgemäße Scheinwerfereinheit nicht miteinander verglichen werden.

Aufgabe der Erfindung ist es, das Vorschaltgerät im Kraftfahrzeug derart zu gestalten und anzuordnen, daß es ohne zusätzlich erforderlichen Platzbedarf gegen Witterungseinflüsse geschützt ist, elektrische Überschläge zu anderen Teilen des Fahrzeuges ausgeschlossen und die hochspannungsführenden Leitungen zur Verringerung kapazitiver Verluste kurz sind.

Diese Aufgabe wird bei einer Kraftfahrzeugscheinwerfereinheit mit den im Obergriff des Hauptanspruchs genannten Merkmalen dadurch gelöst, daß sich das Vorschaltgerät in einem abgekapselten Formgehäuse aus Kunststoff befindet, das unmittelbar am Reflektor befestigt ist. Die Verbindung zwischen dem Reflektor und dem Formgehäuse ist vorteilhafterweise umlaufend abgedichtet. Auf diese Weise werden der im allgemeinen ungenutzte Freiraum in der Nachbarschaft des Reflektors ausgenutzt und die schädlichen Einwirkungen von Feuchtigkeit, Korrosion und anderen Witterungseinflüssen vom Vorschaltgerät ferngehalten. Das Formgehäuse ist vorzugsweise derart gestaltet, daß die Hochdruckentladungslampe direkt in das Vorschaltgerät einsetzbar ist. Hierdurch können die die hochfrequente Hochspannung führenden Leitungen zwischen dem Vorschaltgerät und der Lampe völlig entfallen, d.h. die HF-Verluste werden auf ein Minimum beschränkt. Nach außen sind somit nur die 12-V-Versorgungsanschlüsse vom Bordnetz des Kraftfahrzeuges geführt, wodurch ein absoluter Berührungsschutz gewährleistet ist.

Die Erfindung wird nachstehend an Hand von vier schematisch dargestellten Figuren näher erläutert:
- Figur 1: zeigt eine Kraftfahrzeugscheinwerfereinheit mit von oben eingesetzter Lampe in Perspektive
- Figur 2: zeigt die Einheit aus Figur 1 in der Seitenansicht
- Figur 3: zeigt eine Kraftfahrzeugscheinwerfereinheit mit vom Reflektorscheitel eingesetzter Lampe in Perspektive
- Figur 4: zeigt die Einheit aus Figur 3 in der Seitenansicht im Schnitt

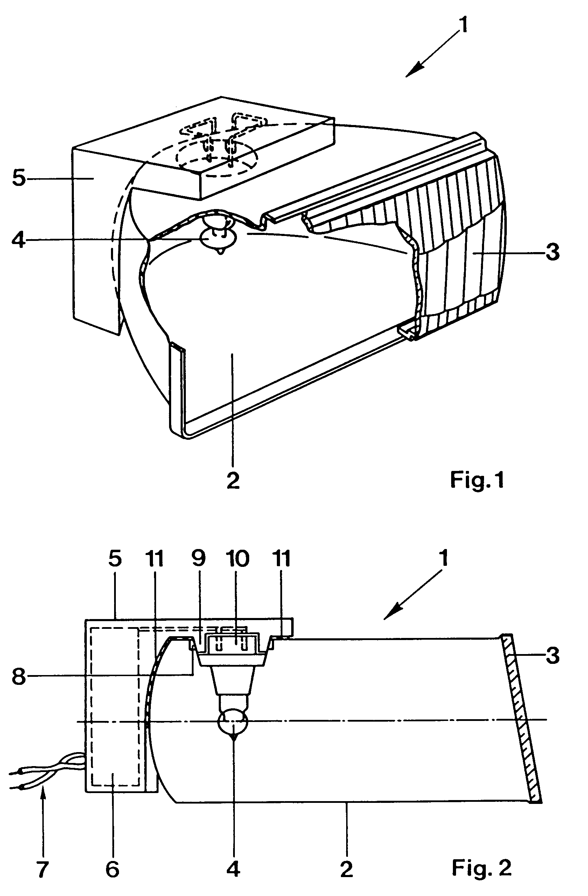

Die Kraftfahrzeugscheinwerfereinheit 1 in den Figuren 1 und 2 weist einen Reflektor 2 auf, der an seiner Lichtaustrittsöffnung durch eine Streuscheibe 3 abgeschlossen ist. Im Brennpunkt des Reflektors 2 ist eine einseitig gesockelte Metallhalogenidhochdruckentladungslampe 4 angeordnet. An den rückwärtigen und oberen Teil des Reflektors 2 schmiegt sich ein aus Kunststoff gefertigtes, etwa L-förmiges Formgehäuse 5 an. Das Formgehäuse 5 enthält ein elektronisches, die Lampe 4 mit einer hochfrequenten Zünd- und Brennspannung versorgendes Vorschaltgerät 6. Der einzige elektrische Anschluß für die Kraftfahrzeugscheinwerfereinheit 1 erfolgt vom Bordnetz des Kraftfahrzeuges (z.B. 12 V Gleichspannung) über das Kabelpaar 7. Im oberen Bereich ist der Reflektor 2 mit einer Öffnung 8 versehen, in der eine Aufnahme 9 für den Sockel 10 der Lampe 4 angeordnet ist. Die Aufnahme 9 bildet hier einen Bestandteil des Formgehäuses 5. Die verbleibenden Fugen zwischen dem Reflektor 2 und dem Formgehäuse 5, insbesondere aber der Bereich um die Öffnung 8 herum, sind mittels einer elastischen Dichtungsmasse 11 gegen Feuchtigkeit abgedichtet.

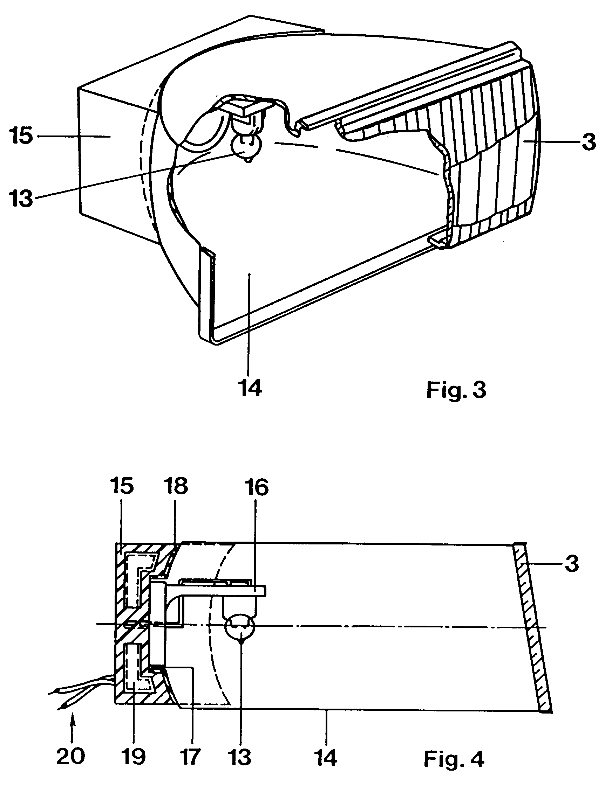

In den Figuren 3 und 4, in denen ein weiteres Ausführungsbeispiel der Erfindung dargestellt ist, ist eine Hochdruckentladungslampe 13 vom Scheitel des Reflektors 14 in diesen eingeführt. Der Reflektor 14 selbst ist an seiner Lichtaustrittsöffnung wie im vorherigen Beispiel durch eine Streuscheibe 3 abgeschlossen. An den rückwärtigen Teil des Reflektors 14 ist ein Formgehäuse 15 aus Kunststoff angepaßt, wobei ein an diesem Formgehäuse 15 befestigter Haltewinkel 16 durch eine Öffnung 17 im Scheitel des Reflektors 14 in diesen hineinragt und die Hochdruckentladungslampe 13 optisch justiert haltert. Die sich berührenden Flächen des Reflektors 14 und des Formgehäuses 15 sind ebenfalls wieder mit einer elastischen Dichtungsmasse 18 abgedichtet, um ein Eindringen von Feuchtigkeit usw. in den Reflektor 14 zu verhindern. Innerhalb des Formgehäuses 15 ist die elektronische Hochfrequenzvorschalt- und Zündvorrichtung 19 geschützt angeordnet. Die Spannungsversorgung (z.B. 12 V Gleichspannung) für die Vorschalt- und Zündvorrichtung erfolgt über das Kabelpaar 20.

## Patentansprüche

1. Kraftfahrzeugscheinwerfereinheit mit einem durch eine Streuscheibe (3) abgedeckten Reflektor (2; 14), einer innerhalb des Reflektors (2; 14) angeordneten Hochdruckentladungslampe (4; 13) und einem zum Betrieb der Hochdruckentladungslampe (4; 13) erforderlichen Vorschaltgerät (6; 19), das eine Zündvorrichtung aufweist, die in unmittelbarer Nähe einer Lampenfassung angeordnet ist, dadurch gekennzeichnet, daß das Vorschaltgerät (6; 19) einschließlich der Zündvorrichtung eine elektronische Hochfrequenzeinheit ist, die sich in einem abgekapselten Formgehäuse (5; 15) aus Kunststoff befindet, das unmittelbar am Reflektor (2; 14) angeordnet ist.

2. Kraftfahrzeugscheinwerfereinheit nach Anspruch 1, dadurch gekennzeichnet, daß die Verbindung zwischen dem Reflektor (2; 14) und dem Formgehäuse (5; 15) mittels einer elastischen Dichtungsmasse (11) umlaufend abgedichtet ist.

3. Kraftfahrzeugscheinwerfereinheit nach Anspruch 1 und 2, dadurch gekennzeichnet, daß die Hochdruckentladungslampe (4; 13) direkt in das elektronische Vorschaltgerät (6; 19) eingesetzt ist.

## Claims

1. Motor vehicle headlight unit having a reflector (2; 14) covered by a lens (3), a high-pressure discharge lamp (4; 13) arranged inside the reflector (2; 14) and a ballast device (6; 19) which is required for operating the high-pressure discharge lamp (4; 13) and has a firing device which is arranged in the direct vicinity of a lamp fitting, characterised in that the ballast device (6; 19) including the firing device is an electronic high-frequency unit which is located in an encapsulated preform housing (5; 15) made of plastic which is arranged directly on the reflector (2; 14).

2. Motor vehicle headlight unit according to Claim 1, characterised in that the connection between the reflector (2; 14) and the preform housing (5; 15) is circumferentially sealed by means of an elastic sealing compound (11).

3. Motor vehicle headlight unit according to Claim 1 and 2, characterised in that the high-pressure discharge lamp (4; 13) is inserted directly into the electronic ballast device (6; 19).

## Revendications

1. Unité de phare por un véhicule automobile, comportant un réflecteur (2;14) recouvert par un verre diffusant (3), une lampe à décharge haute pression (4;13) disposée à l'intérieur du réflecteur (2;14) et un ballast (6;19) nécessaire pour faire fonctionner la lampe à décharge à haute pression (4;13) et qui comporte un dispositif d'amorçage disposé à proximité directe d'une douille de la lampe, caractérisée par le fait que le ballast (6;19), y compris le dispositif d'amorçage forment une unité électronique à haute fréquence, qui est située dans un boîtier moulé encapsulé (5;15) en matière plastique, qui est disposé directement sur le reflecteur (2;14).

2. Unité de phare d'automobile suivant la revendication 1, caractérisée par le fait que la liaison entre le réflecteur (2;14) et le boîtier moulé (5;15) est étanchéifiée sur sa périphérie au moyen d'une masse d'étanchéité élastique (11).

3. Unité de phare de véhicule automobile suivant les revendications 1 et 2, caractérisée par le fait que la lampe à décharge à haute pression (4;13) est insérée directement dans le ballast électronique (6;19).
